# EUROPEAN PATENT SPECIFICATION

(11) **EP 0 330 557 B1**
(45) Date of publication and mention of the grant of the patent: **24.11.1993**
(21) Application number: 89400471.2
(22) Date of filing: 20.02.1989
(51) Int. Cl.: B62K 19/12, B62K 19/20

(54) **Frame for motorcycles**
Motorradrahmen
Cadre pour motocyclettes

(30) Priority: 20.02.1988 JP 38259/88
(43) Date of publication of application: 30.08.1989
(73) Proprietor: HONDA GIKEN KOGYO KABUSHIKI KAISHA, Minato-ku Tokyo (JP)
(72) Inventor: Ishii, Takanori, Shiki-shi Saitama (JP); Saito, Hiroshi, Tokyo (JP)
(74) Representative: Mongrédien, André

(56) References cited:
- FR-A- 612 718
- FR-A- 1 367 704
- US-A- 2 854 249

## Description

### Industrial Field of Utilization

The present invention relates to a frame for motorcycles and, more particularly, to a frame assembled by joining right and left split frame members produced of aluminum casting.

### Prior Art

A frame having a head pipe which is formed by curved portions of semi-circular section provided at the front, when right and left split frame members of aluminum casting are joined has been widely known. (Refer to Laid-Open Japanese Patent Application n° Sho 61-129383 for example). In this example, the right and left split frame members are combined by bolts, and the head pipe section also is bolted at the front and rear of the curved portions.

To combine the right and left split frame members by bolts, it is necessary to form mounting bosses on the split frame. However, as the frame for motorcycles commonly tends to open from the head pipe obliquely backwardly, the mounting bosses are so formed as to be inserted into mating surfaces. Especially the bosses at the rear part of the head pipe are recessed deep, resulting in a weakened boss area. To maintain substantial frame strengh, therefore, it is necessary to increase frame weight.

Furthermore, as relatively long bolts are used, the mating surfaces of the head pipe will be slightly out of alignment, and therefore it is difficult to maintain the round sectional form of the head pipe. However, because the inner surface of the head pipe serves as a bearing mounting surface, the head pipe is required to have comparatively high-accuracy roundness. To provide a specified accuracy, therefore, it is also required to perform machining after the assembly process or to adopt extremely strict assembly process control conditions. This, however, will affect operating efficiency in the frame assembly process.

FR-A-612,718 describes a frame for motorcycle comprising joined right and left frame members, each of the frame members comprising a curved portion of semi-circular section at the front end for defining a head pipe when the frame members are joined, wherein ring members are welded at the upper and lower ends of the head pipe, and US-A-2,854,249 a similar frame in which the head pipe is divided into three frame members. The rings support ball bearings for the steering shaft and are mounted on flat surfaces of the head pipe. The invention is characterized in that the curved portions comprise cut-outs for receiving a part of at least one ring member, said ring member being welded to the frame members by a circumferential stepped weld line made of two arcuate parts at different levels joined by two intermediate parts. Hence the welding lines that join the rings to the head pipe are longer and the assembly is stronger.

Furthermore, the inner surfaces of the ring members are bearing mounting surfaces, enabling easy accuracy improvement of these surfaces.

### BRIEF DESCRIPTION OF THE DRAWINGS

Figs. 1 to 7 show one embodiment of the present invention;
Fig. 1 is an exploded perspective view of a frame to be assembled;
Fig. 2 is a perspective view of a major portion;
Fig. 3 is an enlarged side view with a major portion cut at the right and left mating surfaces;
Fig. 4 is a plan view of a major portion;
Fig. 5 is a sectional view taken along the line V-V of Fig. 1;
Fig. 6 is a partial sectional view of a major portion; and
Fig. 7 is a sectional view taken along the line VII-VII of Fig. 1.

### Preferred Embodiment

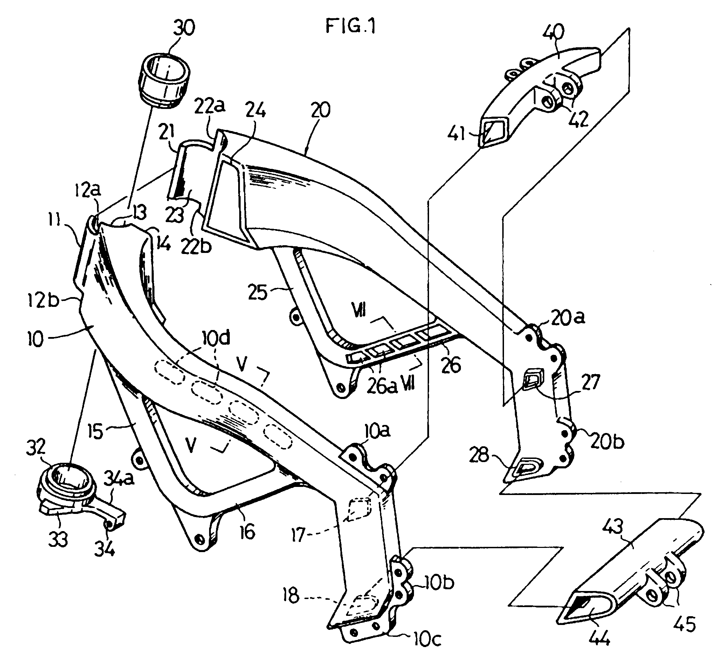

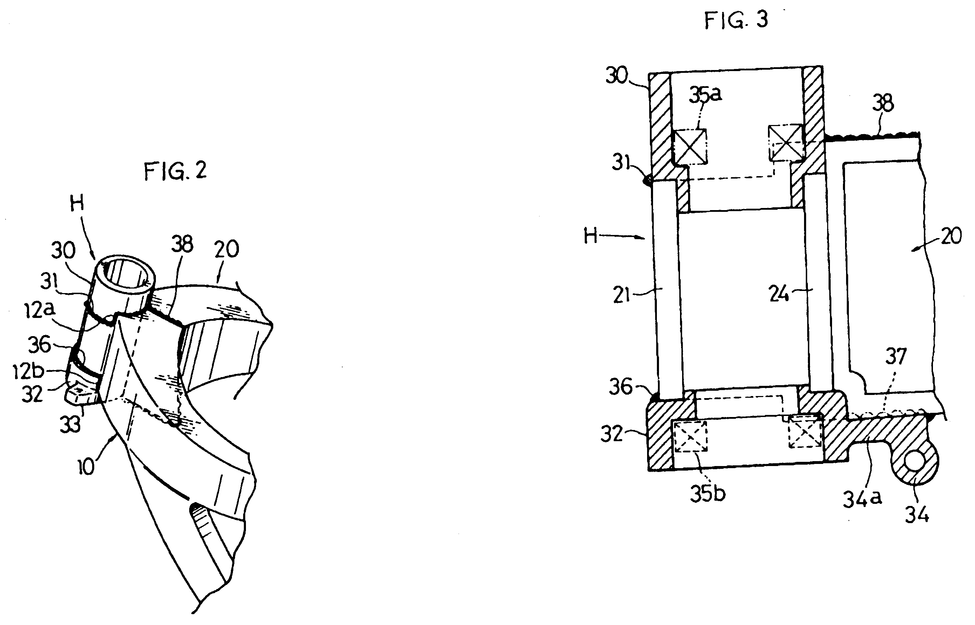

Figs. 1 to 7 show one embodiment of the present invention. Fig. 1 gives an exploded view of a frame for motorcycles. Fig. 2 is an outside view of the front section of the frame. And Fig. 3 is an enlarged sectional view showing a part thereof cut into right and left parts of the joint.

As illustrated in each drawing, this frame consists of a left split frame member 10 and a right split frame member 20, both formed into a shape of square pipe by aluminum casting.

At the front ends of the split frame members are formed projecting curved portions 11 and 21 having a nearly semi-circular section. At the upper and lower ends of these curved portions are formed cutouts 12a, 12b and 22a, 22b. The curved portions 11 and 21 are combined to form a head pipe H. Behind the curved spaces 13 and 23 formed by the curved portions 11 and 21, mating surfaces 14 and 24 of the split frame members 10 and 20 are formed.

Either of the split frame members 10 and 20 extends obliquely downward to the rear, a part of which is branched off into downpipes 15 and 25 and rear pipes 16 and 26, forming a triangular construction. At the rear upper part of the split frame members 10 and 20, seat rail mounting sections 10a and 20a are formed. Further, a little below them are formed bosses 17 and 27 projecting toward the inside of vehicle body. At the lower end of the split frame members 10 and 20, rear stay mounting sections 10b and 20b and a side stand mounting section 10c are formed; and on the inner side, slightly above the side stand mounting section 10c, bosses 18 and 28 are formed projecting, opposite to each other.

In the space of the head pipe H formed in the curved spaces 13 and 23 of the split frame members 10 and 20, an upper ring member 30 is inserted from above and welded at joints between the upper ring member 30 and the curved portion 11, the cutout 12a, the curved portion 22, the cutout 22a, and the split frame members 10 and 20, forming a step-like weld line 31. In the upper ring member 30, a bearing 35a is mounted.

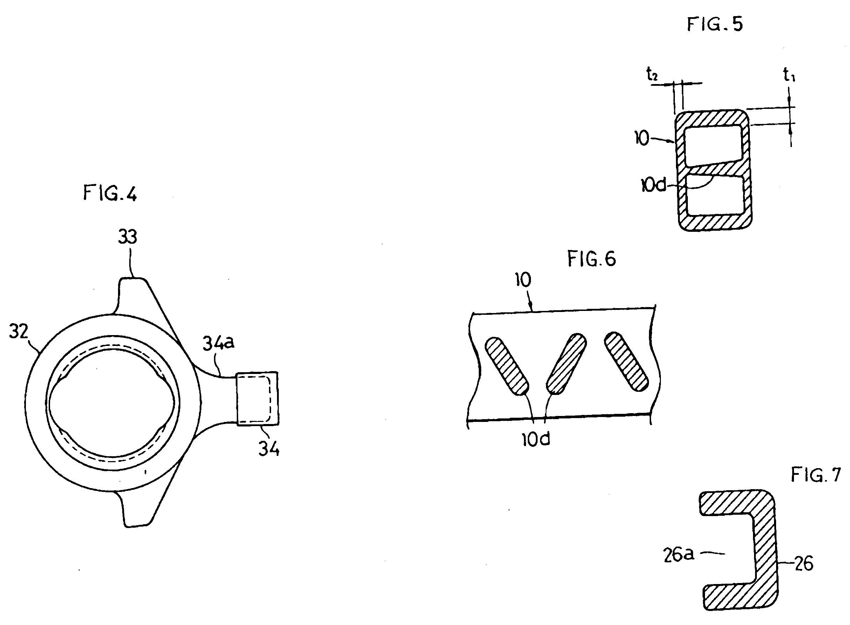

In the lower part of the space of the head pipe H also, a lower ring member 32 is fitted. The lower ring member 32, as shown in Fig. 4, has handlebar stoppers 32 formed on both sides, and a radiator mounting boss 34 formed projecting at the rear. The inside of the lower ring member 32 is designed to mount a bearing 35b.

Around the lower ring member 32 also, the curved portion 11, the cutout 12b, the curved portion 21, the cutout 22b, and the split frame members 10 and 20 are welded at joints, forming a step-like weld line 36. Furthermore, the extended portion 34a for the mounting boss 34 and the bottom of the split frame members 10 and 20 are also welded at their joints, forming a weld line 37. Numeral 38 in Fig. 2 denotes a weld line formed at a joint between the mating surfaces 14 and 24.

In bearings 35a and 35b mounted in these ring members, a steering stem not shown which is inserted in the head pipe H is rotatably supported.

As shown in Fig. 1, cross members 40 and 43 are mounted in the upper and lower positions at the rear of the right and left split frame members 10 and 20. The upper cross member 40 is a nearly square tubular member, and openings 41 formed at both ends of the upper cross member 40 are designed to fit on the bosses 17 and 27 of the right and left split frame members 10 and 20. Numeral 42 expresses a rear cushion unit mounting section not shown.

The lower cross member 43 is similarly a member formed into a tubular shape. Openings 44 provided at both ends of the lower cross member 43 can fit on the bosses 18 and 28 of the right and left split frame members 10 and 20. Numeral 45 indicates a rear cushion unit mounting section.

Although not clearly illustrated, the upper and lower cross members 40 and 43 and the right and left split frame members are welded at each joint. This type of installation that the cross members 40 and 43 are fitted to the bosses 17 and 27 of the split frame members 10 and 20, facilitates the positioning of the frame members at the time of assembly and also increases the rigidity of the frame.

As shown in Fig. 5, ribs 10d are formed inside of the split frame. In addition, the thickness t₁ of the upper and lower walls is greater than the thickness t₂ of the right and left walls, that is t₁>t₂. Therefore, decreasing the right and left wall thickness could reduce the vehicle body weight and, besides, the ribs 10d are formed tapered as they go outwardly, thereby enabling the prevention of deformation resulting from shrinkage after forming, of thin side panels which present outside surfaces. The ribs, as shown in Fig. 6, can freely be formed in a zigzag arrangement.

The downpipe 15 is formed in the shape of box. The rear pipes 16 and 26, as shown in Fig. 7, are provided with a plurality of openings 26 inside. This portion has a form of open channel opening inwardly, which, therefore, could have been decreased in wall thickness without affecting their outside appearance.

Next, a procedure for assembling this frame will be explained. First, the bearing mounting section of the ring members 30 and 32 are machined, and placed within the curved spaces 13 and 23 of the right and left split frame members. Then the right and left split members 10 and 20 are joined. At this time, the uper and lower cross members 40 and 43 are connected with the openings 41 and 44 through the bosses 17 and 27 and the bosses 18 and 28. In this state, the ring members 30 and 32 and the split frame members 10 and 20 including the curved portions 11 and 21 are joined by welding, and furthermore the split frame members 10 and 20 are welded to the mating surfaces 14 and 24 at their joints, thus forming a step-like weld line 31 on the upper ring member 30 side along the cutouts 12a and 22a. Similarly, a step-like weld line 36 is formed on the lower ring member 32 side along the cutouts 12b and 22b. Furthermore, weld lines 37 and 38 are also formed.

Thus welding around the upper and lower ring members 30 and 32 much more increases a welded part as compared with the simply welded joints of the split frame members 10 and 20, thereby increasing weld strength and accordingly increasing frame rigidity. Particularly the weld lines 31 and 36, being of the stepped form, also increase in length, thus improving weld strength. Besides, in the present embodiment, since the weld line 37 is formed by utilizing the radiator mounting boss 34, the frame rigidity can be increased.

After thus assembling the split frame members 10 and 20, the interior of the upper and lower ring members 30 and 32 are further finished as occasion calls. Thereafter, the bearings 35a and 35b are pressed in.

At this time, the substantial inside diameter of the head pipe H formed by the curved portions 11 and 12 is the inside diameter of the ring members 30 and 32. These surfaces make bearing mounting surfaces. Besides, these bearing mounting surfaces can easily be improved in accuracy to specification without deformation during assembly operation, facilitating the mounting of the bearings 35a and 35b.

### Effects of the Invention

According to the present invention, in which the head pipe is formed by joining the curved portions provided at the front of the right and left split frame members, the frame is assembled into one body by welding joints including the vicinity of the ring members inserted between the curved portions. Length of welds and weld strength, therefore, can be increased, thereby increasing frame rigidity and reducing vehicle weight.

In addition, as the inner surfaces of the ring members serve as the bearing mounting surfaces, the specified accuracy of the bearing mounting surfaces are readily obtainable and bearing mounting operation can be performed very easily, thereby remarkably improving operation efficiency.

## Claims

1. A frame for motorcycle comprising joined right (20) and left (10) frame members, each of the frame members comprising a curved portion (11, 21) of semi-circular section at the front end for defining a head pipe (H) when the frame members are joined, wherein ring members (30, 32) are welded at the upper and lower ends of the head pipe, characterized in that the curved portions comprise cut-outs (12, 22) for receiving a part of at least one ring member, said ring member being welded to the frame members by a circumferential stepped weld line made of two arcuate parts at different levels joined by two intermediate parts.

2. A frame for motorcycle according to claim 1, wherein the frame members comprises surfaces (14, 24) mating each other behind the curved portions, weld lines (37, 38) extending along borders of the mating surfaces.

## Patentansprüche

1. Motorradrahmen mit einem zusammengesetzten rechten (20) und linken (10) Rahmenelement, die jeweils einen gekrümmten Abschnitt (11, 21) eines halbkreisförmigen Querschnitts an dem vorderen Ende aufweisen, um ein Kopfrohr (H) zu bilden, wenn die Rahmenbauteile verbunden sind, wobei Ringelemente (30, 32) an dem oberen und dem unteren Ende des Kopfrohres angeschweißt sind,
**dadurch gekennzeichnet,**
daß die gekrümmten Abschnitte Ausschnitte (12, 22) aufweisen, um einen Teil von wenigstens einem Ringelement aufzunehmen, und daß das Ringelement mit den Rahmenbauteilen durch eine in Umfangsrichtung abgestufte Schweißnaht verschweißt ist, die aus zwei bogenförmigen Abschnitten auf unterschiedlichen Höhen besteht, die durch zwei Zwischenabschnitte verbunden sind.

2. Motorradrahmen nach Anspruch 1, wobei die Rahmenbauteile Flächen (14, 24) aufweisen, die hinter den gekrümmten Abschnitten zueinander passen, wobei sich Schweißnähte (37, 38) entlang den Rändern der zueinander passenden Flächen erstrecken.

## Revendications

1. Cadre pour motocyclette comportant des éléments assemblés de cadre de droite (20) et de gauche (10), chacun des éléments de cadre comportant une partie incurvée (11, 21) de section semi-circulaire à l'extrémité avant pour constituer un tube de tête (H) lorsque les éléments de cadre sont assemblés, dans lequel des éléments formant bagues (30, 32) sont soudés aux extrémités supérieure et inférieure du tube de tête, caractérisé en ce que les parties incurvées comportent des découpes (12, 22) destinées à recevoir une partie d'au moins un élément formant bague, ledit élément formant bague étant soudé aux éléments de cadre par un cordon de soudure en gradin circonférentiel, constitué par deux parties arquées à différents niveaux reliées par deux parties intermédiaires.

2. Cadre pour motocyclette selon la revendication 1, dans lequel les éléments de cadre comportent des surfaces (14, 24) accouplées l'une à l'autre à l'arrière des parties incurvées, les cordons de soudure (37, 38) s'étendant le long de bords des surfaces d'accouplement.
